(19) **Europäisches Patentamt / European Patent Office / Office européen des brevets**

(11) **EP 2 114 104 A2**

(12) # EUROPEAN PATENT APPLICATION

(43) Date of publication:
**04.11.2009 Bulletin 2009/45**

(51) Int Cl.:
***H04W 56/00*** (2009.01)

(21) Application number: **09167908.4**

(22) Date of filing: **04.05.2006**

(84) Designated Contracting States:
**AT BE BG CH CY CZ DE DK EE ES FI FR GB GR HU IE IS IT LI LT LU LV MC NL PL PT RO SE SI SK TR**

(62) Document number(s) of the earlier application(s) in accordance with Art. 76 EPC:
**06290717.5 / 1 852 981**

(71) Applicants:
- **Mitsubishi Electric Information Technology Centre Europe B.V.**
  **35700 Rennes (FR)**
- **MITSUBISHI DENKI KABUSHIKI KAISHA Chiyoda-ku, Tokyo 100-8310 (JP)**

(72) Inventors:
- **Brunel, Loïc**
  **35000, RENNES (FR)**
- **Jechoux, Bruno**
  **06410, BIOT (FR)**

(74) Representative: **Blot, Philippe Robert Emile Cabinet Lavoix**
**2, place d'Estienne d'Orves**
**75441 Paris Cedex 09 (FR)**

Remarks:
This application was filed on 14-08-2009 as a divisional application to the application mentioned under INID code 62.

(54) **Method to estimate multiple round trip delays attached to cellular terminals from a RACH signal received within a dedicated time slot multiplexed onto an uplink traffic multiplex frame.**

(57) The method for estimating a propagation round trip delay, existing between a base station and a terminal, and comprised within a predetermined round trip delay range, comprises the following steps:
transmitting from the base station on a downlink a start order signal (30) to the terminal,
after reception by the terminal of the end of the start order signal, sending a signature signal from the terminal to the base station on a uplink,
receiving at the base station within a signature receiving time slot (28) the signature signal (34, 38, 42),
processing at the base station the received signature signal to provide a round trip delay information.

The processing step comprises a cyclic correlation step performed within a fixed correlation time window (54) by using a unique reference sequence (48).

*FIG.4*

**Description**

The present invention relates to a method to estimate multiple round trip delays attached to cellular terminals from a RACH signal received within a dedicated time slot multiplexed onto an uplink traffic multiplex frame.

In a UMTS-like cellular communication system comprising an uplink (UL) from a set of terminals (T) to a base station (BS) and a downlink (DL) from the base station (BS) to each terminal (T) of the set, it is well known to provide a random access channel (RACH) in time domain, the RACH being time multiplexed with an uplink (UL) traffic.

In uplink, random access is usually meant by contrast with scheduled traffic wherein traffic channels are tightly synchronized by a timing advance mechanism.

Indeed, random access is used by a terminal when no uplink resource (in time, code and or frequency) has been assigned to the terminal by the base station (BS). For instance, this occurs for initial access to the network, when the terminal is switched on.

In some communication systems (e.g. using an Orthogonal Frequency Division Multiplex), synchronization of the uplink at the base station is beneficial for increasing performance and even required for operating.

This is obtained by the timing advance means whereby the base station measures the round trip delay (RTD) with each terminal, the round trip delay depending on the distance between the base station (BS) and the terminal (T), and the base station sends a terminal - specific timing advance information to each terminal in order that the terminal shifts its uplink data transmission so as to align its data with other uplink terminals' data at the base station (BS).

A well known method to measure the round trip delay comprises the following steps. Firstly, the terminal (T) performs downlink (DL) synchronization including data timing, frame and frequency synchronization. Then, the terminal sends its own associated RACH containing at least a preamble also called signature and possibly a message just after the end of the reception of a predetermined symbol (e.g. after the end of a first synchronization sub-frame of the downlink (DL) frame). Finally, the base station (BS) detects the RACH signature and determines the round trip delay RTD as the delay between the end of the downlink transmission of the predetermined symbol and the beginning of the uplink RACH reception eventually following a predetermined processing duration at terminal level.

As known per se, a RACH signature is coarsely synchronized, signature reception time slot in uplink at base station requires to be carefully seized in order to avoid any undesirable interference with synchronized schedule traffic data.

In general case, an idle period is needed as regard type of traffic multiplex and/or transmit/receive duplex in order to avoid such interference, which should be minimized.

When using a usual correlation process in time domain the size of the signature receiving time slot cannot be minimized while limiting the self noise generated by the correlation process since a sliding correlation window or a comb correlating architecture, need to be used.

When the size is minimized by using a fixed correlation window, the self noise generated by the correlation process is increased.

Known solutions are described in the patent documents US-B1-6 546 062, US-B1-6 388 997, US2005/0047530 and the non patent document "Concatenated extended complementary sequences for inter-base station synchronization in UMTS TDD mode" edited in VTC Fall 2001, IEEE 54th, Vehicle technology conference, proceedings, Atlantic City N.J. Oct. 7-11, 2001.

The objective problem is that, when using a fixed correlation window in order to minimize the size of the signature receiving time slot, the self noise generated by the correlation process increases and round trip delay RDT estimation accuracy decreases.

The object of the invention is to provide a RTD estimation method in time domain with a size optimized signature receiving time slot that increases the accuracy of RTD estimation.

The invention accordingly relates to a method for transmitting a signature signal as described in claim 1.

According to particular embodiments, the method for transmitting a signature signal comprises one or more of the features described in dependent claims 2 to 5.

The invention also relates to a terminal transmitting a signature signal as described in claim 6.

According to particular embodiments, the terminal comprises one or more of the features described in dependent claims 7 to 10.

A better understanding of the invention will be facilitated by reading the following description, which is given solely by way of examples and with reference to drawings, in which:

- Figure 1 is a mobile communication system architecture using a single terminal.
- Figure 2 is a communication flow chart with an enlarged view of up link and down link frames at base station level.
- Figure 3 is a data structure of a signature sequence.
- Figure 4 is a detailed view of a signature reception time slot with three superposed signatures corresponding to the same terminal located at three different positions.
- Figure 5 is a first embodiment flow chart of the method used to estimate the round trip delay at base station level for a single terminal mobile communication system.
- Figure 6 is a second embodiment flow chart of the method used to estimate the round trip delay at base station level for a single terminal mobile communication system.

- Figure 7 is a chart illustrating the correlation magnitude versus time obtained with the method shown in figures 5 or 6.
- Figures 8, 9 and 10 are three configurations views of a mobile communication system using three terminals.
- Figure 11 is a communication flow chart of three superposed configurations with an enlarged view of up link and down link frames at base station level.
- Figure 12 is a schematic view illustrating the way to build three signature sequences.
- Figures 13, 14 and 15 are data structure of the three signature sequences.
- Figure 16 is an enlarged and detailed view of a signature reception time slot wherein all the received signatures of the three system configurations are superposed.
- Figure 17 is a first embodiment flow chart of the method used for jointly estimating each round trip delay and terminal identifier codes in the system using three terminals.
- Figure 18 is a second embodiment flow chart of the method used for jointly estimating each round trip delay and terminal identifier codes in the system using three terminals.
- Figure 19 is a chart illustrating the correlation magnitude versus time obtained with the method shown in figures 17 or 18.
- Figure 20 is a chart illustrating correlation magnitude versus time obtained with the method shown in figures 17 or 18 for a system using unsynchronized and synchronized terminals.

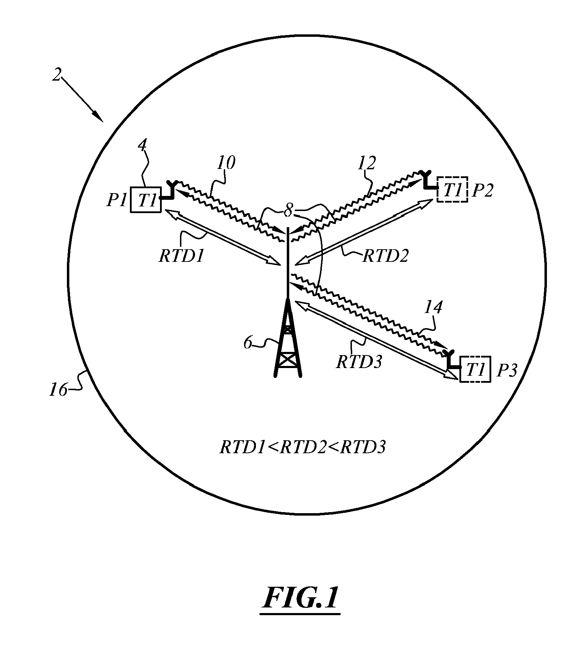

In figure 1, three configurations of a single terminal mobile communication system 2 are illustrated. The single terminal mobile communication system 2 comprises a user terminal 4 referenced as T1 and a base station 6 referenced as BS. In a first configuration, the terminal 4 is located at a first position referenced as P1. In a second configuration, the terminal 4 is located at a second position referenced as P2. In a third position, the terminal 4 is located at a third position referenced as P3. As P1 is close to BS, P2 is located further from BS and P3 is located the furthest from BS.

At each position P1, P2 and P3 the terminal 4 is able to receive the same downlink signal 8 transmitted from BS but with different propagation path delays.

At each position P1, P2 and P3 the terminal can transmit respective uplinks signals 10, 12 and 14.

Time required for the base station 6 to transmit a data to the mobile 4 and to receive the same data after immediate retransmission upon reception by the terminal 4 depends on the two ways path distance and is referred as round trip delay RTD.

Round trip delays corresponding to P1, P2 and P3 are respectively referenced as round trip delay RTD1, RTD2, and RTD3 with RTD1<RTD2<RTD3.

The maximum coverage range as defined herein by the position P3 defines the cell 16 served by the base station 6 and can be characterized by round trip delay RTD3.

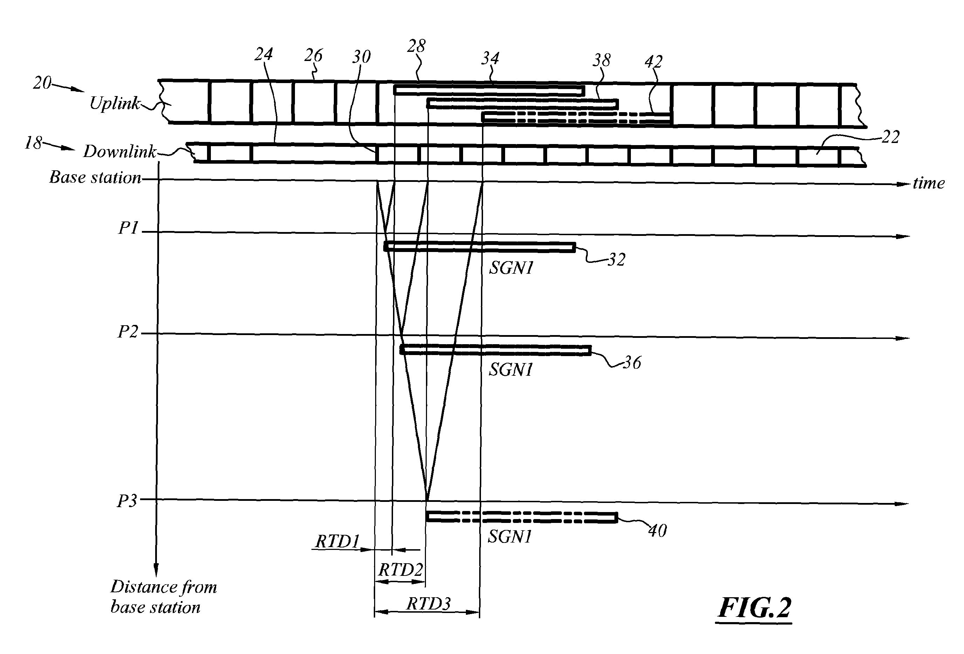

In the figure 2, a downlink 18 and an uplink 20 data structure are illustrated, wherein time attached to an abscissa axis is flowing from the left to the right. The downlink frame 18 is a time multiplex of several traffic data bursts 22 and regularly spaced synchronisation bursts, only one 24 being shown herein. The uplink frame 20 at base station 8 level is a time multiplex of scheduled traffic data 26 and regularly spaced RACH (Random Access Channel) receiving time slot 28. Since the useful part of RACH as regard synchronization properties is its preamble, also called signature, only signatures will be described from here.

In order to enable a terminal 4 to synchronize in uplink with the base station 6, after propagation of the end signal 30 of the synchronization burst 24 transmitted from BS and upon reception, possibly after a predetermined duration, the terminal 4 transmits a signature referenced as SGN1 for its data structure and referenced respectively 32, 36 and 40 as depending on the transmission location of the terminal P1, P2 and P3. The signature SGN1 received within the signature receiving time slot 28 is located differently depending on the terminal position and is respectively referenced as 34, 38 42 when issued from the terminal located at P1, P2 and P3. The difference of time between the start order time 30 of the synchronization burst 24 and the end of reception of the signature SGN1 at base station 6 level, possibly following the predetermined duration at terminal level, is equal to the round trip delay of the terminal 4. Round trip delays corresponding respectively to the received signatures 34 (in full lines frame), 38 (in dotted lines frame) and 42 (in phantom lines frame) are round trip delay RTD1, RTD2 and RTD3. In the figure 2, the propagation paths of the signature tail ends are shown in bold lines in the axis frame distance from base station versus time.

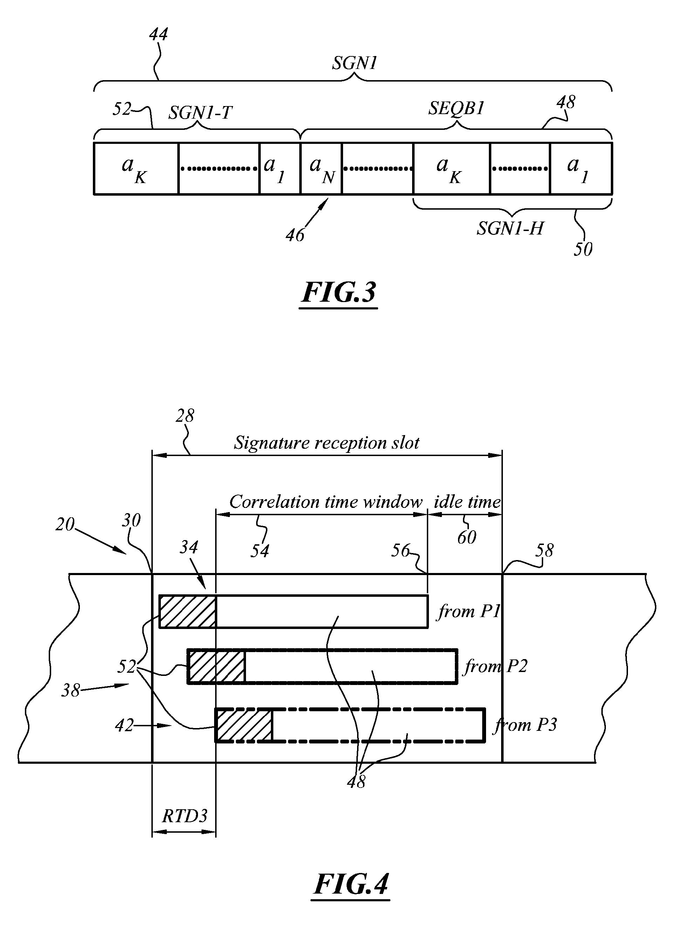

In figure 3, the data structure 44 of the signature SGN1 is shown. The signature SGN1 comprises a set of data 46 that can be divided into a reference sequence 48 referenced as SEQB1 and a cyclic extension 52 referenced as SGN1-T that can be viewed as a tail part of the signature SGN1.

The reference sequence SEQB1 is a set of successive data from $a_1$ to $aN$, N being the length of the reference sequence 44. When transmitted by the terminal, the first data transmitted of SGN1 is $a_1$.

A head part 50 of the reference sequence of SEQB1 is the sequence of data ranging from $a_1$ to $a_K$ and the cyclic extension SGN1-T has the same data structure as the head part SGN1-H. In a variant, the cyclic extension may be located at the head of signature and have a same data structure as the tail part of the sequence.

Here, the sequence is a CAZAC (Constant Amplitude Zero Auto-Correlation) sequence and more particularly a Zadoff Chu sequence defined as

$$a(k) = W_N^{k^2/2+qk}$$

if N even, k=0, 1, ...N-1, q is any integer

$$a(k) = W_N^{k(k+1)/2+qk}$$

if N odd, k=0, 1, ...N-1, q is any integer

$$\text{with } W_N = \exp(-j2\pi r/N)$$

where r is relatively prime to N.

A CAZAC sequence has a periodic autocorrelation function which is a Dirac function. Constant amplitude enables a good protection against non-linearity when high power transmission is needed.

As a variant, a sequence ZAC (Zero Auto-Correlation) may also be used.

In the figure 4, the signature reception time slot 28 is shown with the three superposed signatures 34, 38, 42 corresponding to the same terminal T1 located at three different positions P1, P2 and P3. The signature receiving time slot 28 is arranged so as to include integrally all the received signatures 34, 38 and 42, thus covering the whole range of round trip delays. The signature receiving time slot 28 comprises a correlation time window 54 which is fixed in time, whose length is equal to the reference sequence length N and wherein a cyclic correlation process will be performed. The start time 56 of the correlation process corresponds to the right end of the correlation time window in the figure 4. The start time 58 of reception of a signature 34 assigned to a terminal 4, located very close to the base station 6, corresponds to the right end of the signature receiving time slot 28. The time interval delimited by the times 56 and 58 defines an idle period 60. The idle period 60 may be necessary in order to avoid interference of signature or RACH with scheduled traffic data.

The cyclic extension 52 of the sequence SEQB1 guarantees that for any received signature 34, 38, 42 included within the correlation time window 54, a cyclically complete set of the reference sequence data is received.

Thus, any received signature data comprised within the correlation window 54 is a cyclically shifted reference sequence derived from SEQB1.

Determining the cyclic shift of the cyclically shifted reference sequence relative to the reference sequence SEQB1 provides the corresponding round trip delay experienced by the terminal T1.

As can be seen in figure 4, the maximum round trip delay RTD3 of signature 42 is equal to the length of the cyclic extension 52 that is also the cyclic shift of the signature data comprised within the correlation time window.

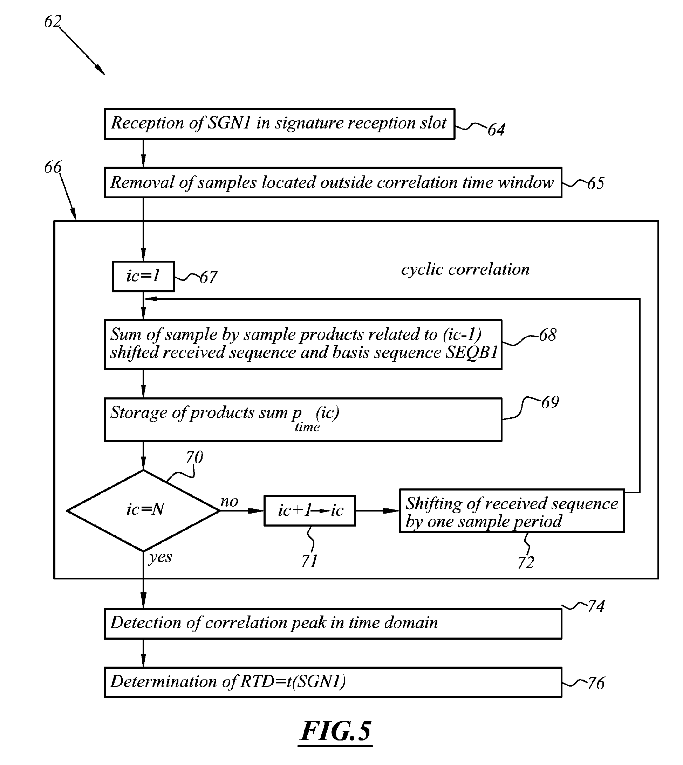

The flow chart of figure 5 illustrates a first embodiment of the method 62 used to estimate the round trip delay at base station BS level for a single terminal mobile communication system 2.

After reception of the complete signature SGN1 within the signature reception slot 28 in a first step 64, samples of the received signature SGN1 located outside the correlation time window 54 are removed in a step 65.

Then, in a following step 66, a cyclic correlation is carried out onto the remaining samples which are inputted in a ring shift register as an initial zero shifted filtered received sequence.

The step 66, comprises the steps 67, 68, 69, 70, 71 and 72.

A shift counter ic is firstly initialized in a step 67 by setting shift counter ic value to one. Then, in step 68 a summation of sample by sample products is performed on the ic-1 shifted filtered received sequence with the unique reference sequence SEQB1. The products sum $P_{time}(ic)$ resulting from step 68 is stored into an array, indexed from 1 to N-1 at index ic-1, by step 69. The step 69 is followed by a step 70 wherein actual counter value ic is compared to N.

If ic is different from N, the counter value ic is incremented by one in step 71 and the actual shift received sequence in the ring register is shifted by one sample period. Then, the steps 68, 69, 70 are performed again.

If ic is equal to N, step 74 proceeds by detection of a correlation peak as maximum value of the products sums array $P_{time}(ic)$. The value of $iC_{max}$ for which the products sum $P_{time}(ic)$ is maximum, is identified in step 76 as the estimated round trip delay of received signature SGN1 referenced as t(SGN1).

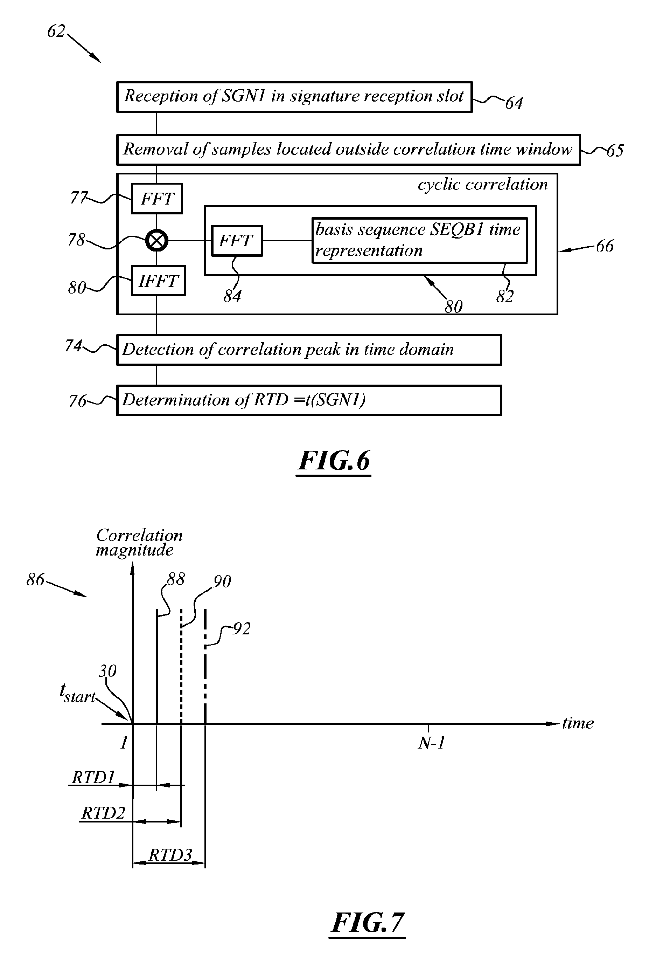

In the second embodiment, the method 62 as shown in flow chart of figure 6 comprises the same sequence of steps 64, 65, 66, 74 and 76 which are all the same except the step 66, wherein the steps 77, 78 and 80 are successively executed. In step 77, a first FFT (Fast Fourier Transform) translates the time domain samples resulting from step 65 into received samples in frequency domain. Then in step 78, the frequency domain translated samples are multiplied by the corresponding frequency domain samples of the reference sequence SEQB1 obtained by step 80. In step 80, after inputting by step 80, the reference sequence SEQB1 in time domain, a second FFT is executed by step 84. After multiplying the two FFT results, then an IFFT (Inverse Fast Fourier Transform) is performed by step 80.

In the chart 86 of figure 7, the correlation magnitude versus time of the three configurations in figure 1 is depicted.

The respective position on the time axis of the full line 88, the dotted line 90 peak and the phantom line 92 relative to $t_{start}$ 30 determines the first, second and third round trip delays RTD1, RTD2 and RTD3.

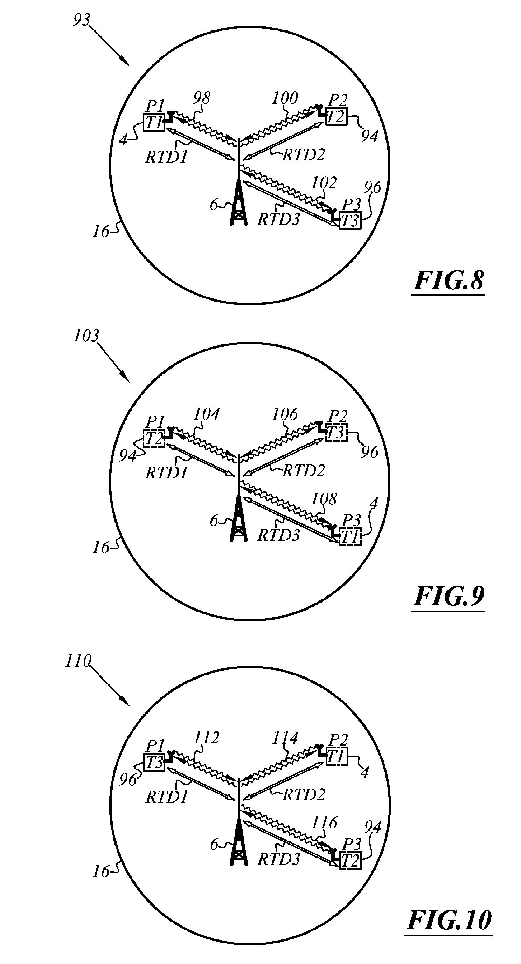

The figures 8, 9 and 10 illustrate three configurations of a mobile communication system using three different terminals 4, 94 and 98 referenced as T1, T2 and T3 , respectively enclosed in a full lines, dotted lines, phantom lines squares.

In the first configuration 93 as illustrated in figure 8, the terminal 4 (T1) is located at P1 while terminal 94 (T2) and terminal 96 (T3) are respectively located at P2 and P3. Respective uplinks assigned to T1, T2 and T3 are referenced as 98, 100 and 102. In the first configuration 93, corresponding round trip delays to the terminals T1, T2 and T3 are respectively round trip delays RTD1, RTD2 and RTD3.

In the second configuration 103 as illustrated in figure 9, the terminal 4 (T1) is located at P3 while terminal 94 (T2) and terminal 96 (T3) are respectively located at P1 and P2. Respective uplinks assigned to T1, T2 and T3 are referenced as 108, 104 and 106. In the second configuration 103, corresponding round trip delays to the terminals T1, T2 and T3 are respectively round trip delays RTD3, RTD1 and RTD2.

In the third configuration 110 as illustrated in figure 10, the terminal 4 (T1) is located at P2 while terminal 94 (T2) and terminal 96 (T3) are respectively located at P3 and P1. Respective uplinks assigned to T1, T2 and T3 are referenced as 114, 116 and 112. In the third configuration 110, corresponding round trip delays to the terminals T1, T2 and T3 are respectively round trip delays RTD2, RTD3 and RTD1.

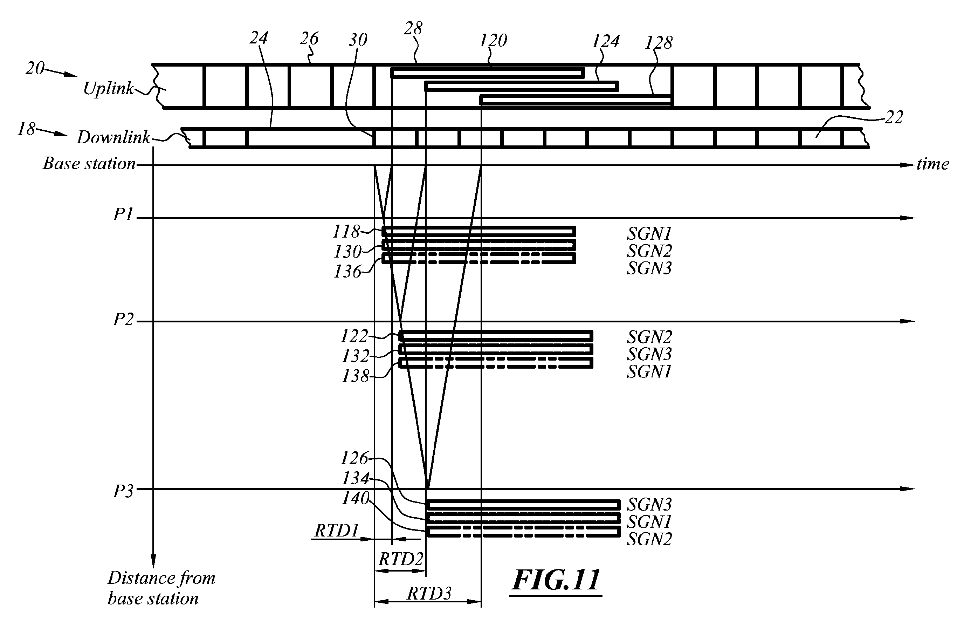

In the figure 11, the downlink 18 and the uplink 20 data structure are illustrated in the same way as in figure 2.

As regards the first configuration 93, in order to enable terminal 4, 94, 96 to synchronize in uplink with the base station 6, after propagation of the start order signal 30 of the synchronization burst 24 transmitted from BS and upon reception of the start order 30, each terminal 4, 94 and 96 transmits possibly after a predetermined duration, an associated signature referenced as SGN1, SGN2 and SGN3 for its data structure, as 118, 122 and 126 for corresponding location of its terminal i.e. P1, P2 and P3. Each signature SGN1, SGN2 and SGN3 is received within the signature receiving time slot 28, is located differently depending on the terminal position and is respectively referenced as 120, 124 and 128 when issued from each terminal 4, 94, 95 respectively located at P1, P2 and P3. The difference of time between the start order time 30 of the synchronization burst 24 and the end of reception of each signature SGN1, SGN2 and SGN3 at base station level possibly following the predetermined duration at terminal level is respectively equal to the round trip delay of the terminal 4, 94 and 96. Round trip delays corresponding respectively to the received signatures 120, 124 and 128 are round trip delays RTD1, RTD2 and RTD3. In the figure 11, the propagation paths of the signature tail ends are shown in bold lines in the two axis frame, the vertical axis representing the distance from base station and the horizontal axis representing time.

Only the received signatures 120, 124 and 128 of the first configuration 93 are herein illustrated within the signature reception time slot 28.

As regards the second configuration 103, only transmitted signatures 130, 132 and 134 are illustrated and respectively assigned as SGN2, SGN3 and SGN1, respectively issued from P1, P2 and P3 by T2, T3 and T1.

As regards the third configuration 110, only transmitted signatures 136, 138 and 140 are illustrated and respectively assigned as SGN3, SGN1 and SGN2, respectively issued from P1, P2 and P3 by T3, T1 and T2.

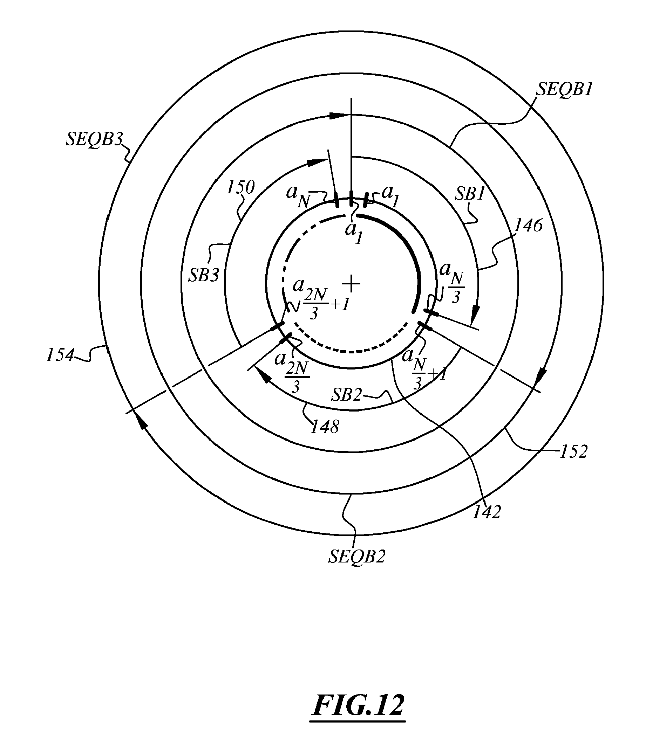

Figure 12 illustrates the way to build three signature sequences derived from the reference sequence SEQB1. The reference sequence SEQB1 is clockwise disposed on a reference ring 142. The reference sequence SEQB1 is equally divided into three successive sub-sequences 146, 148 and 150 referenced as SB1, SB2 and SB3, assuming that N is an integer multiple of 3.

SB1 comprises is the set of data ranging from $a_1$ to $a_{N/3}$. SB2 is the set of data ranging from $a_{(N/3)+1}$ to $a_{2N/3}$. SB3 is the set of data ranging from $a_{(2N/3)+1}$ to aN.

The first signature sequence SEQB1 is the reference sequence and can be described as the set of successive sub-sequences SB1, SB2 and SB3.

The second signature sequence 152 referenced as SEQB2 is defined as the set of successive sub-sequences SB2, SB3 and SB1.

The third signature sequence 154 referenced as SEQB3 is defined as the set of successive sub-sequences SB3, SB1 and SB2.

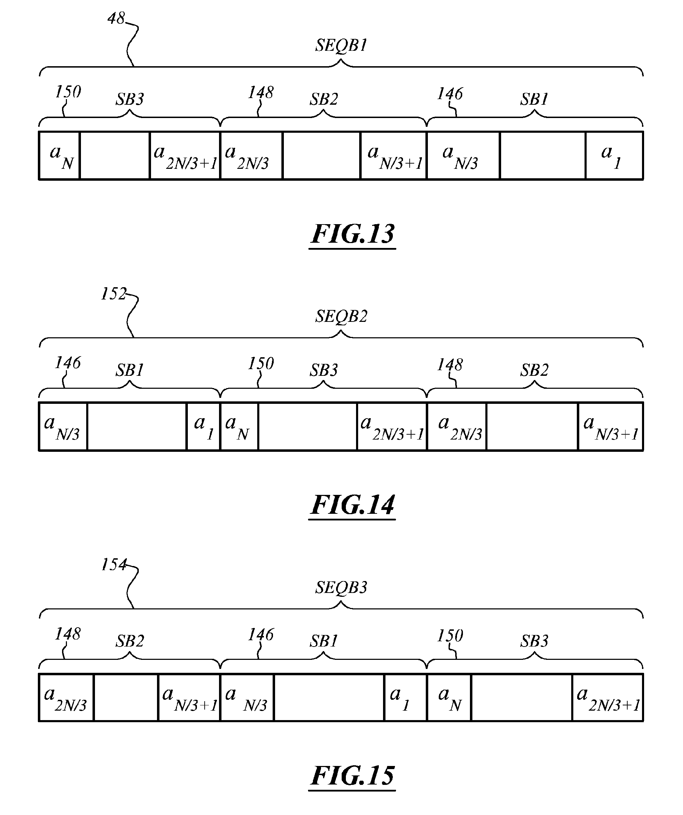

The linearly deployed sequences SEQB1 and SEQB2, SEQB3 are described respectively in figure 13, figure 14 and figure 15. All the sequence are mutually orthogonal.

Building of signature SGN1 is described above. SGN2 and SGN3 are built in the same way above described for SGN1.

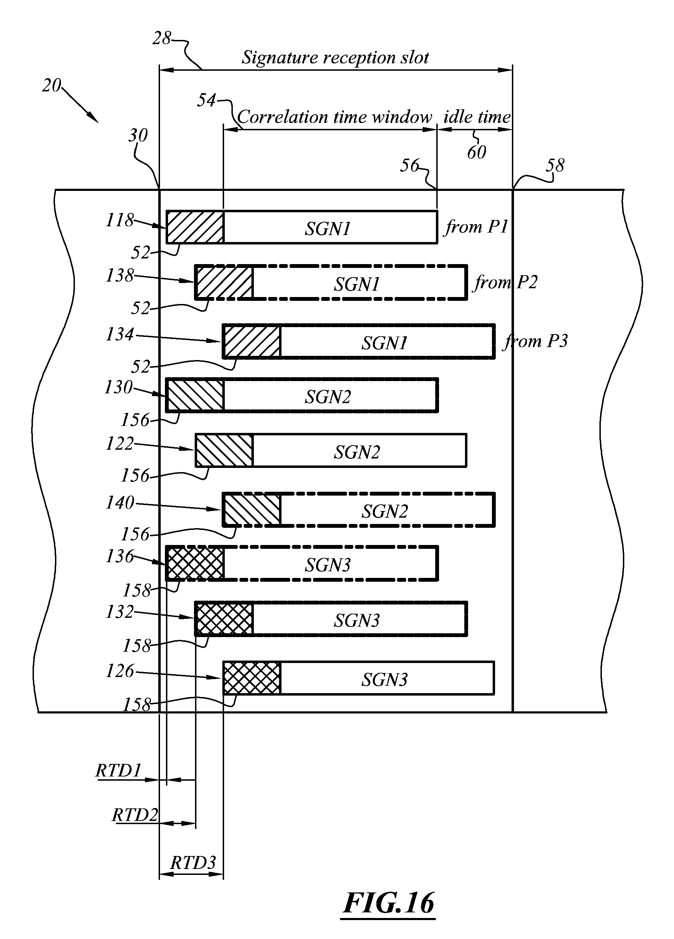

In figure 16, is illustrated the signature reception time slot 28 wherein all the received signatures 118, 138, 134, 130, 122, 140, 136, 132, 126 of the three system configurations are superposed. The signatures of the first configuration 93 are enclosed within rectangles bordered by full lines. The signatures of the second configuration are enclosed within rectangles bordered by dotted lines. The signatures of the third configuration are enclosed within rectangles bordered by phantom lines.

An actual reception should be seen as the same type of lines enclosing the signatures. For example, in the case of the first configuration, only 118, 122 and 126 will be shown in an actual reception.

Signature cyclic extensions 52, 156 and 158 are respectively a signature tail of each signature SGN1, SGN2 and SGN3. All signature extensions have the same length.

In a variant signature cyclic extensions may be respectively a signature head of each signature SGN1, SGN2 and SGN3.

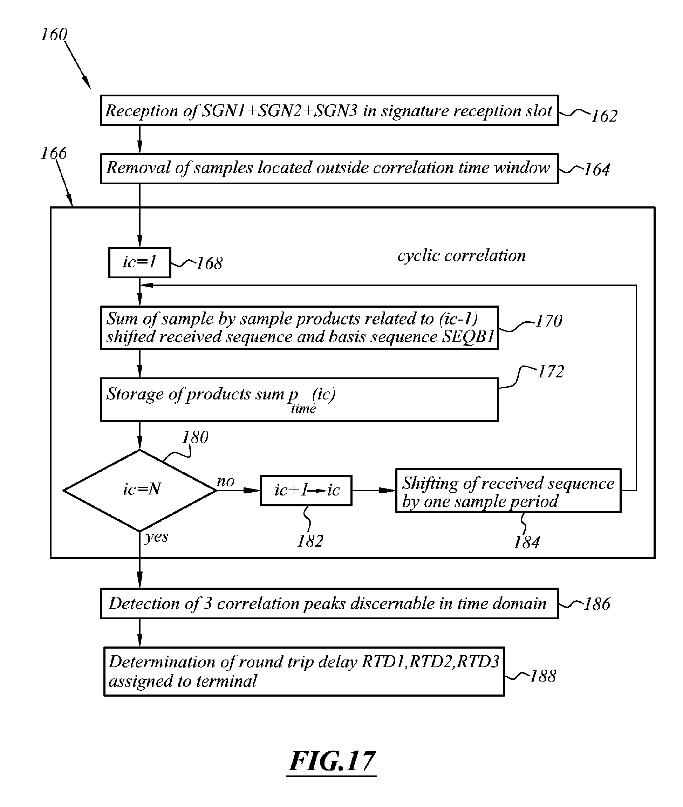

The flow chart of figure 17 illustrates a first embodiment of the method used to jointly estimate each round trip delay and terminal identifier code at base station level in the mobile communication system using three terminals.

After reception of the sum of all signatures, SGN1+SGN2+SGN3 in the signature reception slot 28 in a first step 162, samples of the received signatures sum SGN1+SGN2+SGN3 located outside the correlation time window 54 are removed in a step 164.

Then, in a following step 166, a cyclic correlation is carried out onto the remaining samples which are inputted in a ring shift register as an initial zero shifted filtered received signal.

In the step 166, a shift counter ic is firstly set up in a step 168 by setting the shift counter ic value to one. Then, in step 170 a summation of sample by sample products is performed on the ic-1 shifted received sequence with the reference sequence SEQB1. The products sum $P_{time}(ic)$ resulting from step 170 is stored into an array, indexed from 1 to N-1 to index ic-1, by step 172. The step 172 is followed by a step 180 wherein actual counter value ic is compared to N.

If ic is different from N, the counter value ic is incremented by one in step 182 and the actual shift received signal in the ring register is shifted by one sample period. Then, the steps 170, 172, 180 are performed again.

If ic is equal to N, step 186 proceeds by detection of three correlation peaks as three highest values of the correlation products sums array $P_{time}(ic)$, each peak corresponding to a signature. This signature is a terminal identifier code assigned to each terminal. The three values of ic for which the products sum is maximum are identified in step 188 as belonging to one of three time intervals associated to a signature and for each detected signature the round trip delay is determined as time difference between the time index of the signature peak and the expected index of the same signature without round trip delay.

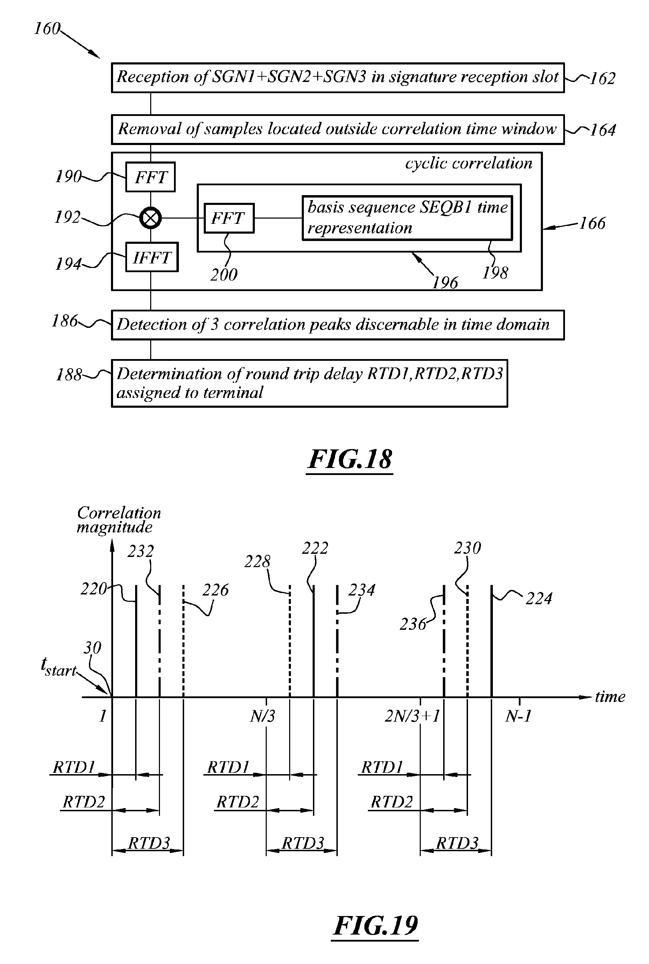

The figure 18 is a second embodiment of the method to detect terminal identifier code and round trip delay for a mobile communication system using three different terminals.

In this second embodiment, the method 160 comprises the same sequence of steps 162, 164, 186 and 188 as ones of the first embodiment, except the step 166, wherein different steps 190, 192 and 194 are successively executed. In step 190, a first FFT (Fast Fourier Transform) translates the time domain samples resulting from the step 164 into frequency domain received samples. Then, in the step 192, the received samples in frequency domain are multiplied by the corresponding samples of the reference sequence SEQB1 in frequency domain obtained by step 196. In the step 196, after inputting by step 198, the reference sequence SEQB1 in time domain, a second FFT is executed by step 200. After multiplying the two FFT results, then an IFFT (Inverse Fast Fourier Transform) is performed on resulting samples by the step 194.

Figure 19 illustrates the correlation magnitude versus time of signatures for three terminals for the three system configurations which are superposed. In the chart of figure 19, full lines, dotted lines and phantom lines respectively depict correlation peak of the first, second and third configurations. Lines 220, 222 and 224 depict respectively time correlation of the first, second, and third signatures for the first configuration. Lines 226, 228 and 230 depict respectively time correlation of the first, second, and third signatures for the second configuration. Lines 232, 234 and 236 depict respectively time correlation of the first, second, and third signatures for the third configuration. As can be seen, time intervals can be defined as respectively assigned to a signature. Thus, here $[a_1, a_{(N/3)-1}]$ is assigned to SGN1, $[a_{N/3}, a_{(2N/3)-1}]$ is assigned to SGN2 and $[a_{(2N/3)-1}, a_{N-1}]$ is assigned SGN3. Round trip delay measured for each received signature is equal to time index of the received signature minus the expected time index of the same signature but without any delay that is 1 for SGN1, N/3 for SGN2 and 2N/3 for SGN3.

In actual operation only three lines of the same type will be shown. As example, in the first configuration case, the correlation peak line 220 exhibits a round trip delay of RTD1, while lines 222 and 224 exhibit respectively a round trip delay of RTD2 and RTD3.

In order to avoid any overlap in the detection of cyclically adjacent signatures, careful attention will be paid on the design through spacing two adjacent signatures by at least the maximum round trip delay expected by the communication system. In the above described system this spacing will be greater than round trip delay RTD3.

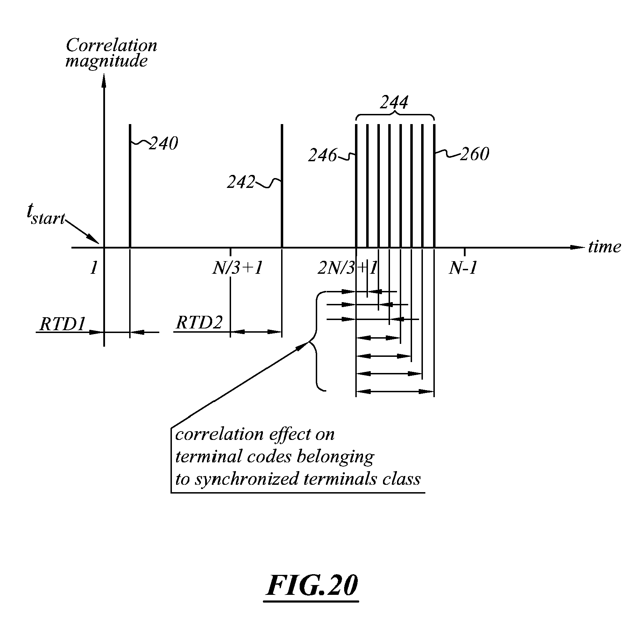

The figure 20 illustrates correlation magnitude versus time following the method above described for a system including uplink synchronized terminal and uplink unsynchronized terminals.

Here, two unsynchronized signatures are assigned to two unsynchronized terminal, a first terminal located as to exhibit round trip delay RTD1 and a second terminal located as to exhibit round trip delay RTD2. Unsynchronized signature means that signature is sent for an initial access.

A set of synchronized signatures are assigned to a set of uplink synchronized terminals. Synchronized signature means that signature is transmitted when the terminal is always time synchronized with a base station in uplink i.e. a timing advance value is already available at the terminal.

The signature sequence as building core of the first synchronized signature of a synchronized terminal is here shifted by 2N/3 relative from the generating sequence of the first unsynchronized signature. Any subsequent signature of synchronized terminal has a generating sequence shifted by a value comprised with the range [2N/3, N-1] relative to the references sequence.

The first and second unsynchronized signatures provide each a time delay and a terminal identifier.

In figure 20, the chart depicts a first correlation peak line 240 corresponding to the first unsynchronized signature with round trip delay RTD1.

The chart also depicts a second correlation peak line 244 corresponding to the second unsynchronized signature with round trip delay RTD2.

The chart also depicts a set 244 of correlation peak lines (first line 246, last line 260) correspond to the set of synchronized signatures with no RTD.

The interest of splitting signature between the two different process (synchronized or not) is that, for the synchronized case the cyclic shift of the different signatures can be merged closer since there is no one trip delay to take into account any more.

In this case, in addition to lower cyclic shift step, lower cyclic extension duration can be used and idle period can be suppressed. The cyclic extension duration should be chosen in order to cope with maximum path delay of the channel, the timing advance error and the filtering effects.

It may be also advantageous to use several CAZAC reference sequences selected to have low cyclic cross correlation between each other. The number of available signatures is hence multiplied by the number of reference sequence at the cost of interference between sequences and receiver complexity increase. The latter is due to the need for multiple correlators (one per reference CAZAC sequence) at the base station instead of a single one when only using only one reference sequence.

A good example of such set of basic sequences with good cyclic cross correlation properties is the clockwise and the counter-clockwise phase rotating pair of sequences extrapolated from the original Zadoff Chu sequence.

$$a_1(k) = W_N^{k^2/2+qk}$$

if N even, k=0, 1, ...N-1, q is any integer

$$a_1(k) = W_N^{k(k+1)/2+qk}$$

if N odd, k=0, 1, ...N-1, q is any integer

$$a_2(k) = W_N^{-(k^2/2+qk)}$$

if N even, k=0, 1, ...N-1, q is any integer

$$a_2(k) = W_N^{-[k(k+1)/2+qk]}$$

if N odd, k=0, 1, ...N-1, q is any integer with

$$W_N = \exp(-j2\pi r/N)$$

where r is relatively prime to N.

This example requires limited storage of the reference sequences since the second reference sequence is derived from the first reference sequence. Thus a certain uniqueness of the reference is maintained.

**Claims**

1. Method for transmitting a signature signal (32, 36, 40) from a terminal to a base station, the signature signal being to be used for estimating a propagation round trip delay at the base station, the propagation round trip delay depending on a distance between the base station (6) and the terminal (4), the method comprising the following steps:

   generating the signature signal (32, 36, 40) at the terminal (4),
   transmitting the signature signal from the terminal (4) to the base station (6) on a uplink,
   receiving the signature signal transmitted by the terminal (4) at the base station (6),

   **characterized in that** the signature signal is transmitted on a random access channel (RACH) time-multiplexed with an uplink traffic, and the signature signal comprises a signature sequence (48) being a cyclic shift of a unique sequence.

2. Method according to claim 1, **characterized in that** the reference sequence is a set of successive data.

3. Method according to any of claims 1 to 2, **characterized in that** the signature signal further comprises a cyclic extension (52) being shorter than the length of the reference sequence (48).

4. Method according to any of claims 1 to 3, **characterized in that** the signature signal comprises a cyclic extension (52) having the same data structure as a portion of the reference sequence (48).

5. Method according to any of claims 1 to 4, **characterized in that** the reference sequence (48) comprises at least a first reference sequence and a second reference sequence, the second reference sequence being derived from the first reference sequence.

6. A terminal (4) transmitting a signature signal (32, 36, 40) to be used for estimating a propagation round trip delay at a base station (6), the propagation round trip delay depending on a distance between the base station and the terminal, comprising :

   generating means for generating the signature signal (32, 36, 40) at the terminal (4), transmitting means for transmitting the signature signal from the terminal (4) to the base station (6) on a uplink,

   **characterized in that** the signature signal is transmitted on a random access channel (RACH) time-multiplexed with an uplink traffic, and the signature signal comprises a reference sequence (48) being a cyclic shift of a unique sequence.

7. The terminal according to claims 6, **characterized in that** the reference sequence is a set of successive data.

8. The terminal according to any of claims 6 to 7, **characterized in that** the signature signal further comprises a cyclic extension (52) being shorter than the length of the reference sequence (48).

9. The terminal according to any of claims 6 to 8, **characterized in** the signature signal comprises a cyclic extension (52) having the same data structure as a portion of the reference sequence (48).

10. The terminal according to any of claims 6 to 9, **characterized in that** the reference sequence (48) comprises at least a first reference sequence and a second reference sequence, the second reference sequence being derived from the first reference sequence.

**FIG.1**

FIG.2

EP 2 114 104 A2

**_FIG.3_**

**_FIG.4_**

62

Reception of SGN1 in signature reception slot — 64

66

Removal of samples located outside correlation time window — 65

cyclic correlation

ic=1 — 67

Sum of sample by sample products related to (ic-1) shifted received sequence and basis sequence SEQB1 — 68

Storage of products sum $p_{time}$ (ic) — 69

70

ic=N

no → ic+1→ic → Shifting of received sequence by one sample period

yes          71          72

Detection of correlation peak in time domain — 74

Determination of RTD=t(SGN1) — 76

**FIG.5**

62

Reception of SGN1 in signature reception slot — 64

Removal of samples located outside correlation time window — 65

cyclic correlation

77 — FFT

78 — ⊗ → FFT → basis sequence SEQB1 time representation

80 — IFFT

84        80        82

— 66

74 — Detection of correlation peak in time domain

76 — Determination of RTD = t(SGN1)

## FIG.6

Correlation magnitude

86

88   90

92

30

$t_{start}$

1

N-1        time

RTD1

RTD2

RTD3

## FIG.7

*FIG.8*

*FIG.9*

*FIG.10*

FIG.11

**FIG.12**

48

SEQB1

150   SB3       148   SB2       146   SB1

| $a_N$ | | $a_{2N/3+1}$ | $a_{2N/3}$ | | $a_{N/3+1}$ | $a_{N/3}$ | | $a_1$ |
|---|---|---|---|---|---|---|---|---|

**_FIG.13_**

152

SEQB2

146   SB1       150   SB3       148   SB2

| $a_{N/3}$ | | $a_1$ | $a_N$ | | $a_{2N/3+1}$ | $a_{2N/3}$ | | $a_{N/3+1}$ |
|---|---|---|---|---|---|---|---|---|

**_FIG.14_**

154

SEQB3

148   SB2       146   SB1       150   SB3

| $a_{2N/3}$ | | $a_{N/3+1}$ | $a_{N/3}$ | | $a_1$ | $a_N$ | | $a_{2N/3+1}$ |
|---|---|---|---|---|---|---|---|---|

**_FIG.15_**

**FIG.16**

*160*

Reception of SGN1+SGN2+SGN3 in signature reception slot ⟶162

*166*

Removal of samples located outside correlation time window ⟶164

ic=1 ⟶168

cyclic correlation

Sum of sample by sample products related to (ic-1) shifted received sequence and basis sequence SEQB1 ⟶170

Storage of products sum $p_{time}(ic)$ ⟶172

*180*

ic=N

no    ic+1⟶ic    Shifting of received sequence by one sample period

*182*    *184*

yes

Detection of 3 correlation peaks discernable in time domain ⟶186

Determination of round trip delay RTD1,RTD2,RTD3 assigned to terminal ⟶188

**FIG.17**

160

Reception of SGN1+SGN2+SGN3 in signature reception slot ∼162

Removal of samples located outside correlation time window ∼164

190∼ FFT

cyclic correlation

192∼ ⊗ — FFT — basis sequence SEQB1 time representation

194∼ IFFT

∼166

200

196

198

186∼ Detection of 3 correlation peaks discernable in time domain

188∼ Determination of round trip delay RTD1,RTD2,RTD3 assigned to terminal

## FIG.18

Correlation magnitude

232

228   222

230

220

226

234

224

236

30

$t_{start}$

1          N/3          2N/3+1     N-1     time

RTD1          RTD1          RTD1

RTD2          RTD2          RTD2

RTD3          RTD3          RTD3

## FIG.19

Correlation
magnitude

244

240

246

260

242

$t_{start}$

time

1

N/3+1

2N/3+1

N-1

RTD1

RTD2

correlation effect on
terminal codes belonging
to synchronized terminals class

**FIG.20**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6546062 B1
- US 6388997 B1
- US 20050047530 A

### Non-patent literature cited in the description

- Concatenated extended complementary sequences for inter-base station synchronization in UMTS TDD mode. VTC Fall 2001, IEEE 54th, Vehicle technology conference, proceedings. 07 October 2001